(19) Europäisches Patentamt

European Patent Office

Office européen des brevets

(11) **EP 1 067 793 A2**

(12) **EUROPEAN PATENT APPLICATION**

(43) Date of publication:
   **10.01.2001  Bulletin 2001/02**

(51) Int. Cl.[7]: **H04N 7/24**

(21) Application number: **00113729.8**

(22) Date of filing: **28.06.2000**

(84) Designated Contracting States:
   **AT BE CH CY DE DK ES FI FR GB GR IE IT LI LU
   MC NL PT SE**
   Designated Extension States:
   **AL LT LV MK RO SI**

(30) Priority:  **29.06.1999 JP 18278599**

(71) Applicant:
   **MATSUSHITA ELECTRIC INDUSTRIAL CO., LTD.
   Kadoma-shi, Osaka 571-8501 (JP)**

(72) Inventors:
   • **Taniyama, Masayuki
    Toyonaka-shi, Osaka 561-0882 (JP)**
   • **Miyagosi, Eiji
    Katano-shi, Osaka 576-0021 (JP)**
   • **Watabe, Akihiro
    Uda-gun, Nara 633-0205 (JP)**

(74) Representative:
   **Grünecker, Kinkeldey,
   Stockmair & Schwanhäusser
   Anwaltssozietät
   Maximilianstrasse 58
   80538 München (DE)**

(54) **Digital video decoding method**

(57)   Every time scenes should be joined, a read rate for a data storage medium is controlled by reference to a buffer occupancy level such that data is stored in the buffer to a predetermined level or more when the first frame of each scene starts being decoded. In this manner, seamless presentation of multiple scenes is realizable by using only a decoder section without resorting to an encoder section.

Fig. 1

EP 1 067 793 A2

## Description

## BACKGROUND OF THE INVENTION

The present invention relates to a digital decoding method for sequentially decoding encoded bit streams, representing multiple scenes of a moving picture, such that those scenes can be presented seamlessly.

MPEG standards are typical video compression standards issued by Moving Picture Experts Group. Japanese Laid-Open Publication No. 9-331524 discloses a digital encoding method for seamlessly joining multiple bit streams (representing respective scenes) to be encoded by the MPEG standards. In this method, to join a first scene seamlessly with a second scene without causing a decoder buffer to overflow or underflow, encoding bit rates (i.e., compression rates) are limited around the end of the first bit stream and around the start of the second bit stream.

According to the prior art, however, the encoder section should prepare for seamless presentation of multiple scenes. Thus, scenes to be joined must be specified in advance. Also, in accordance with such a technique, the resultant image quality might vary even within a single scene.

## SUMMARY OF THE INVENTION

It is therefore an object of the present invention to realize seamless presentation of multiple scenes using only the decoder section and without resorting to the encoder section.

To achieve this object, a first inventive method is applied to a digital decoding apparatus in which encoded bit streams, representing multiple scenes of a moving picture, are read out from a data storage medium and then input to a decoder by way of a buffer. In the first method, the bit streams are digitally decoded one after another to present the scenes seamlessly by controlling a rate at which a current scene is being read out from the data storage medium such that an occupancy level of the buffer will be a predetermined level or more when a first frame of a next scene starts being decoded.

A second inventive method is applied to a digital decoding apparatus in which encoded bit streams, representing multiple scenes of a moving picture, are input to a decoder by way of a buffer. According to the second method, the bit streams are digitally decoded one after another to present the scenes seamlessly by performing the following steps. First, it is estimated how high an occupancy level of the buffer will be when a first frame of each scene starts being decoded. If the estimated buffer occupancy level when a scene starts being decoded is less than a predetermined level by a deficit, then start of decoding a first frame of a first scene is postponed until data of the first scene has been stored in the buffer to a level equal to a sum of the deficit and the predetermined level.

A third inventive method is also applied to a digital decoding apparatus in which encoded bit streams, representing multiple scenes of a moving picture, are input to a decoder by way of a buffer. According to the third method, the bit streams are digitally decoded one after another to present the scenes seamlessly by performing the following steps. First, a rate at which each said bit stream, associated with one of the scenes, is input to the buffer is controlled to no greater than a certain limit. Then, it is estimated how high an occupancy level of the buffer will be when a first frame of each scene starts being decoded. If the estimated buffer occupancy level when a scene starts being decoded is less than a predetermined level by a deficit, then start of decoding a first frame of a first scene is postponed until data of the first scene has been stored in the buffer to a level equal to a sum of the deficit and the predetermined level.

## BRIEF DESCRIPTION OF THE DRAWINGS

Figure **1** is a block diagram illustrating a first exemplary video playback system to which the inventive digital decoding method is applicable.

Figure **2** is a timing diagram illustrating how the occupancy level of the bit stream storage (buffer) shown in Figure **1** changes with time.

Figure **3** is a block diagram illustrating a second exemplary video playback system to which the inventive digital decoding method is also applicable.

Figure **4** is a timing diagram illustrating how the occupancy level of the bit stream storage (buffer) shown in Figure **3** changes with time.

Figure **5** is a block diagram illustrating a third exemplary video playback system to which the inventive digital decoding method is also applicable.

Figures **6** and **7** are timing diagrams illustrating how the occupancy level of the bit stream storage (buffer) shown in Figure **5** may change with time.

## DETAILED DESCRIPTION OF THE INVENTION

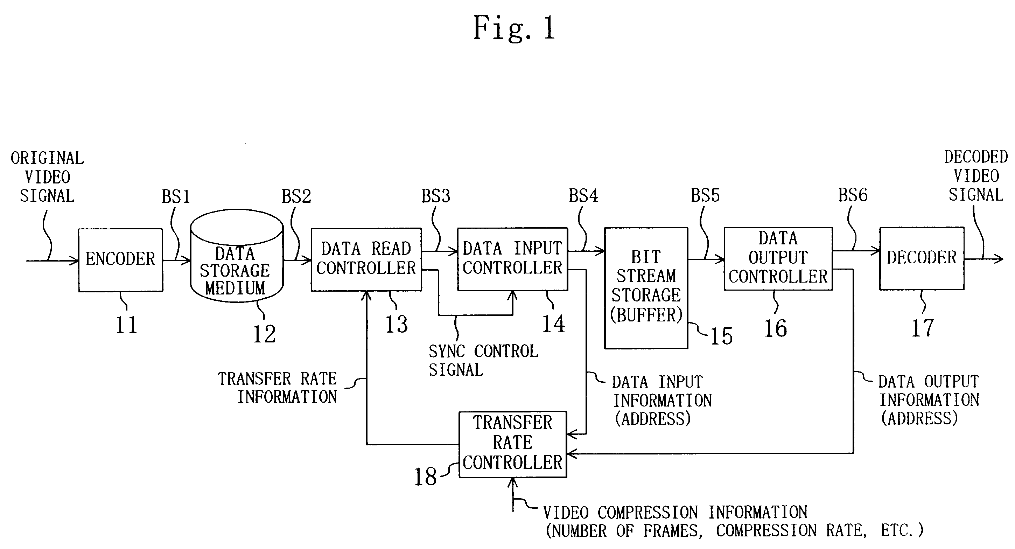

Figure **1** illustrates a first exemplary video playback system to which the inventive digital decoding method is applicable. As shown in Figure **1**, the system includes encoder **11**, data storage medium **12**, data read controller **13**, data input controller **14**, bit stream storage (buffer) **15**, data output controller **16**, decoder **17** and transfer rate controller **18**. In Figure **1**, encoded bit streams are identified by **BS1** through **BS6**, respectively.

The system shown in Figure **1** is a so-called "codec" including both the encoder **11** and decoder **17**. The encoder **11** produces a bit stream **BS1** by compressing and encoding an original video signal. The bit stream **BS1** generated is recorded on the data storage medium **12**, which may be any recording medium like magneto-optical disk, magnetic tape or semiconductor memory. The data read controller **13** can read out a bit stream **BS2** from the data storage medium **12** at a variable rate. Receiving a bit stream **BS3** and a sync control signal from the data read controller **13**, the data input controller **14** writes a bit stream **BS4** on the buffer **15** when the data read controller **13** reads the bit stream **BS2** from the data storage medium **12**. The buffer **15** is a memory for temporarily storing the bit stream **BS4** provided from the data input controller **14**. The data output controller **16** reads out a bit stream **BS5** from the buffer **15**. The decoder **17** decodes a bit stream **BS6**, which has been provided from the data output controller **16**, thereby outputting a decoded video signal. By reference to data input and output information provided from the data input and output controllers **14** and **16**, i.e., information about write and read addresses at the buffer **15**, the transfer rate controller **18** calculates an occupancy level of the buffer **15**. Then, based on the information obtained about the occupancy level of the buffer **15** and video compression information about the number of frames in each scene, a compression rate, etc., the transfer rate controller **18** determines a read rate for the data storage medium **12**. Then, the controller **18** provides information about this rate to the data read controller **13** as transfer rate information.

In this case, a bit rate at which the bit stream **BS4** is input to the buffer **15** (which will be herein called a "buffer input rate") is equal to the rate at which the bit stream **BS2** is read out from the data storage medium **12** and is variable. Also, a bit rate at which the decoder **17** decodes the bit stream **BS6** (which will be herein called a "decode rate") is equal to the rate at which each scene is encoded (i.e., a compression rate). It should be noted that part of a memory resource, shared by the encoder **11**, decoder **17** and other circuit blocks, is allocated to the buffer **15**.

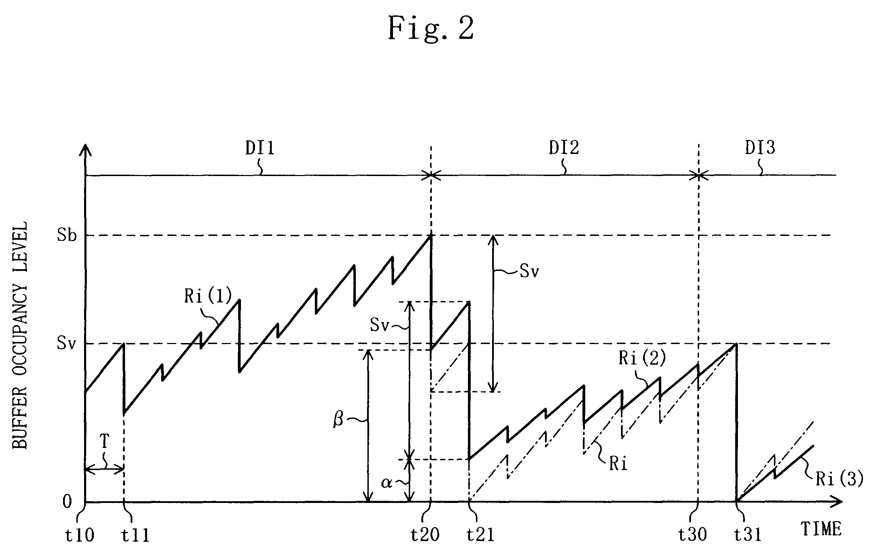

Figure **2** illustrates how the occupancy levels of the decoder buffer **15** shown in Figure **1** change with time. In Figure **2**, **DI1**, **DI2** and **DI3** denote intervals during which respective bit streams representing first, second and third scenes are input to the buffer **15**. The second and third scene input intervals **DI2** and **DI3** start at times **t20** and **t30**, respectively. Each scene is represented by one group of pictures (GOP), for example. In Figure **2**, the one-dot-chain line plots the changing occupancy levels of the buffer **15** when the buffer input rate is fixed at the same value **Ri** for every scene. On the other hand, the solid line plots the changing occupancy levels of the buffer **15** when the buffer input rates for the first, second and third scenes are set to **Ri(1), Ri(2)** and **Ri(3),** respectively. In these lines, the gradient of a rightwardly increasing segment represents a buffer input rate and the length of a vertical segment represents the picture data quantity on a frame-by-frame basis. In the illustrated example, each unit of picture data is supposed to be removed from the buffer **15** instantaneously.

In Figure **2**, **Sv** represents the size of a virtual buffer for use in bit rate control by the encoder **11,** i.e., the size of a video buffering verifier (VBV) buffer as defined by the MPEG standards. That is to say, once data has been stored in the buffer **15** to the predetermined level **Sv,** decoding of the first frame can be started. The predetermined data level **Sv** is also equal to the maximum quantity of data that can be removed from the buffer **15** at a time.

T shown in Figure **2** represents one frame period. For example, according to the NTSC (National Television System Committee) video rate (i.e., 30 frames per second), T=33.3 ms.

As shown in Figure **2,** at a time **t11** that is later than a time **t10** by one frame period **T,** the occupancy level of the buffer **15** for the first scene reaches the predetermined level **Sv.** Accordingly, decoding of the first scene may be started at this time **t11.** Also, at a time **t21** when the first frame of the second scene starts being decoded, the occupancy levels of the buffer **15** are equal to or greater than the predetermined level **Sv** for both cases represented by the one-dot-chain and solid lines. Thus, the second scene can be joined with the first scene seamlessly without causing the buffer **15** to underflow. Furthermore, at a time **t31** when the first frame of the third scene starts being decoded, the occupancy levels of the buffer **15** are equal to the predetermined level **Sv** for both cases represented by the one-dot-chain and solid lines. Thus, the third scene can also be joined with the second scene seamlessly without causing the buffer **15** to underflow.

The case plotted by the one-dot-chain line in Figure **2** will be described in detail. At the time **t20,** the data with the predetermined quantity **Sv** for the last frame of the first scene is removed from the buffer **15** and output to the decoder **17**. During subsequent one frame period **T**, the data of the second scene is input at the buffer input rate **Ri.** Thus, at the time **t21**, the occupancy level of the buffer **15** has been restored to the predetermined level **Sv.** Accordingly, the data with the predetermined quantity **Sv** for the first frame of the second scene is removed from the buffer **15** and output to the decoder **17** at the time **t21**. As a result, the occupancy level of the buffer **15** becomes zero at the time **t21**. That is to say, the occupancy level of the buffer **15** at the time **t20** before the data has been removed is given by

$2 \times$ Sv-Ri $\times$ T . Thus, even in the worst-case scenario where the data with the predetermined quantity **Sv** is removed from the buffer **15** twice consecutively, if the total capacity **Sb** of the buffer **15** meet the condition given by the following Equation (1):

$$Sb=2\times Sv\text{-}Ri\times T \tag{1}$$

the second scene can be joined with the first scene seamlessly without causing the buffer **15** to overflow or underflow. Naturally, the total capacity **Sb** of the buffer **15** may be greater than $2\times$Sv-Ri$\times$T .

As also can be seen front the one-dot-chain plot shown in Figure **2,** to attain the predetermined level **Sv** at the time **t31** such that the third scene can be joined seamlessly with the second scene, the occupancy level of the buffer **15** should be increased from zero to the predetermined level **Sv** at a rate of Ri-Re(2) within a period of time T$\times$N(2) between the times **t21** and **t31,** where **N(2)** is the number of frames in the second scene and **Re(2)** is an encoding bit rate (compression rate) for the second scene. That is to say, the buffer input rate **Ri** should be set so as to meet the following Equation (2):

$$Ri=Sv/(T\times N(2))+Re(2) \tag{2}$$

Specifically, supposing Sv=1.835 Mbit, T=33.3 ms, N(2) =15 and Re(2)= 8 Mbps, Ri = 11.67 Mbps and Sb =3.281 Mbit according to Equations (2) and (1), respectively. That is to say, by setting the total capacity **Sb** of the buffer **15** to 3.281 Mbit or more and the buffer input rate **Ri** (i.e., the read rate for the data storage medium **12**) to 11.67 Mbps, the bit streams representing these three scenes can be decoded one after another so as to present these scenes seamlessly without causing the buffer **15** to overflow or underflow.

As for a case plotted by the solid line in Figure **2,** data for the last frame of the first scene with a quantity smaller than the predetermined quantity **Sv** is removed at the time **t20** from the buffer **15** with its total capacity **Sb** filled with data and then output to the decoder **17.** During the subsequent one frame period **T,** data for the second scene is input to restore the occupancy level of the buffer **15** to more than the predetermined level **Sv.** Thus, at the time **t21** when the data with the predetermined quantity **Sv** for the first frame of the second scene is removed from the buffer **15** and output to the decoder **17,** data with a quantity $\alpha$ ( > 0) is still left in the buffer **15.** Using this residual data quantity $\alpha$, the transfer rate controller **18** controls the buffer input rate **Ri(2)** (i.e., the read rate for the data storage medium **12**) for the second scene in accordance with the following Equation (3):

$$Ri(2)=(Sv\text{-}\alpha)/(T\times N(2))+Re(2) \tag{3}$$

such that the occupancy level of the buffer **15** at the time **t31** when the first frame of the third scene starts being decoded will be equal to the predetermined level **Sv.** In this case, data with the predetermined quantity **Sv** is also stored in the buffer **15** at the time **t31** when decoding is started. Accordingly, the third scene can be joined with the second scene seamlessly without causing the buffer **15** to underflow. In addition, supposing $\alpha$=0.5 Mbit under the same conditions as the one-dot-chain plot, Ri(2) = 10.67 Mbps according to Equation (3). Thus, the power dissipated during the second scene input interval **DI2** can be reduced.

As can be seen, the system shown in Figure **1** controls the read rate for the data storage medium **12** based on the residual data quantity of the buffer **15** every time scenes are joined together, thereby realizing seamless presentation of multiple scenes using only the decoding section.

Optionally, the buffer input rate **Ri(2)** (i.e., the read rate for the data storage medium **12**) for the second scene may also be controlled based on the residual data quantity $\beta$ at the time **t20** shown in Figure **2,** i.e., the quantity of data left in the buffer **15** when the data for the last frame of the first scene is removed from the buffer **15** and output to the decoder **17.**

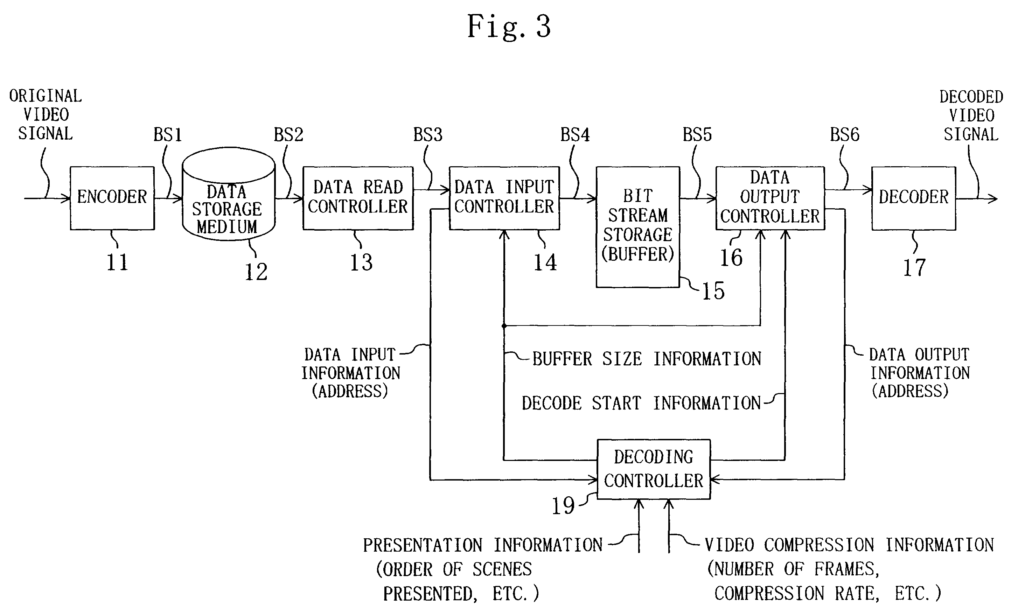

Figure **3** illustrates a second exemplary video playback system to which the inventive digital decoding method is also applicable. As shown in Figure **3,** the system includes encoder **11,** data storage medium **12,** data read controller **13,** data input controller **14,** bit stream storage (buffer) **15,** data output controller **16,** decoder **17** and decoding controller **19.** In Figure **3,** encoded bit streams are also identified by **BS1** through **BS6,** respectively.

The system shown in Figure **3** is a so-called "codec" including both the encoder **11** and decoder **17.** The encoder **11** produces a bit stream **BS1** by compressing and encoding an original video signal. The bit stream **BS1** generated is recorded on the data storage medium **12,** which may be any recording medium like magneto-optical disk, magnetic tape or semiconductor memory. The data read controller **13** reads out a bit stream **BS2** from the data storage medium **12** at a fixed rate. The data input controller **14** receives a bit stream **BS3** from the data read controller **13.** The buffer **15** is a memory with a variable capacity for temporarily storing a bit stream **BS4** provided from the data input controller **14.** Part of a memory resource, shared by the encoder **11,** decoder **17** and other circuit blocks, is allocated to the buffer **15.** The data output controller **16** reads out a bit stream **BS5** from the buffer **15.** The decoder **17** decodes a bit stream **BS6,** which has been provided from the data output controller **16,** thereby outputting a decoded video signal. By reference to video compression information about the number of frames in each scene, compression rate, etc. and presentation information about the order of scenes presented, etc., the decoding controller **19** estimates the occupancy level of the buffer **15** when the first frame of each scene starts being decoded. If the estimated buffer occupancy level when a scene starts being decoded is less than the predetermined level **Sv** (i.e., the size of the VBV buffer), then the decoding controller **19** provides buffer size information to the data input and output controllers **14** and **16** instructing that the default capacity **Sb** of the buffer **15** (see Equation (1)), which was defined on the supposition that there will be no data quantity shortage, be increased by a data quantity deficit $\gamma$. Then, the decoding controller **19** provides decode start information to the data output controller **16** instructing that decoding of the first frame of the first scene should not be started until the data of the first scene has been stored in the buffer **15** to the level equal to the sum of the predetermined level **Sv** and the deficit $\gamma$. Also, by reference to the data input and output information provided from the data input and output controllers **14** and **16,** i.e., information about write and read addresses at the buffer **15,** the decoding controller **19** knows the occupancy level in the buffer **15.**

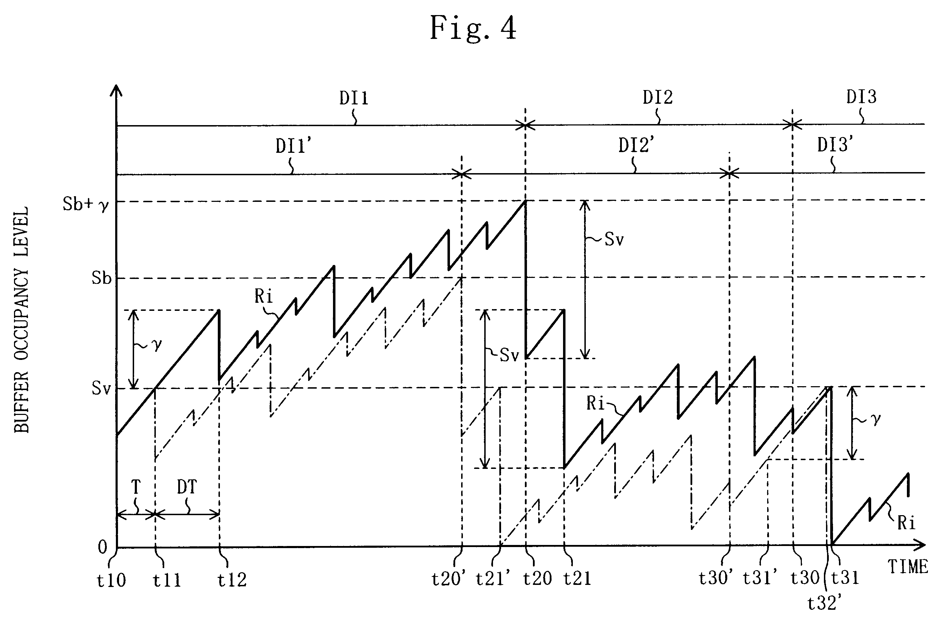

Figure **4** illustrates how the occupancy level of the buffer **15** shown in Figure **3** changes with time. In this case, a rate **Ri** at which the bit stream is input to the buffer **15** (i.e., the buffer input rate) is constant throughout the scenes. In Figure **4,** the one-dot-chain line plots changing occupancy levels of the buffer **15** and represents that if the first frame of the first scene starts being decoded at a time **t11,** then the buffer **15** will underflow at a time **t31'.** In that case, the bit streams representing the first, second and third scenes are input to the buffer **15** over the intervals **DI1',** **DI2'** and **DI3',** respectively. As shown in Figure **4,** the second and third scene input intervals **DI2'** and **DI3'** start at respective times **t20'** and **t30'.** In Figure **4,** the solid line plots changing occupancy levels of the buffer **15** and represents that if decoding of the first frame of the first scene is delayed until a time **t12,** then the buffer **15** will not underflow. In that case, the bit streams representing the first, second and third scenes are input to the buffer **15** over the intervals **DI1, DI2** and **DI3,** respectively. As shown in Figure **4,** the second and third scene input intervals **DI2** and **DI3** start at respective times **t20** and **t30.**

At a time **t11,** which is one frame period **T** later than the time **t10,** the occupancy level of the buffer **15** for the first scene reaches the predetermined level **Sv** as shown in Figure **4.** According to the decoding process as represented by the one-dot-chain line plot, the first frame of the first scene starts being decoded at the time **t11.** Even so, data with the predetermined quantity **Sv** is still stored in the buffer **15** at a time **t21',** which is one frame period **T** later than the time **t20'.** Thus, decoding of the first frame of the second scene can be started immediately. However, the occupancy level of the buffer **15** is lower than the predetermined level **Sv** by the deficit $\gamma$ at a time **t31',** which is one frame period **T** later than the time **t30'.** Accordingly, decoding of the first frame of the third scene cannot be started immediately but postponed until a time **t32',** when the data will be stored in the buffer **15** to the predetermined level **Sv.** That is to say, a so-called "VBV delay (or startup delay)" is caused between the times **t31'** and **t32',** and therefore the third scene cannot be joined with the second scene seamlessly. For example, if the encoding bit rate for the second scene is rather high, the seamless presentation might not be realizable unless some measure is taken, e.g., increasing the buffer input rate for the second scene (see Equation (3)).

The data quantity deficit $\gamma$ can be estimated as:

$$\gamma = (Re(2) - Re(1)) \times T \times N(2) + Sv \times (1 - N(2)/N(1)) \tag{4}$$

where **N(1)** and **N(2)** are the respective numbers of frames in the first and second scenes and **Re(1)** and **Re(2)** are encoding bit rates (or compression rates) of these two scenes. That is to say, the data quantity deficit $\gamma$ depends on the difference in compression rate **Re(2) - Re(1)** between two consecutive scenes and on the frame number ratio **N(2)/N(1)** between them.

According to the decoding process as represented by the solid-line plot in Figure **4,** decoding of the first frame of the first scene is not started until a time **t12,** which is later than the time **t11** by a period **DT.** In other words, start of decoding is intentionally delayed until the data of the first scene has been stored in the buffer **15** to a level equal to the sum of the predetermined level **Sv** and the deficit $\gamma$ that can be estimated by Equation (4). As a result, the buffer **15** will not underflow at the time **t21** when the first frame of the second scene starts being decoded or the time **t31** when the first frame of the third scene starts being decoded. That is to say, not only seamless joining of the second scene with the first but also such joining of the third with the second are realizable as well. It should be noted, however, that the total capacity of the buffer **15** should be increased up to Sb+$\gamma$ so that the buffer **15** will not overflow.

By delaying the start of decoding of a first scene in accordance with the estimated deficit $\gamma$ in this manner, the system shown in Figure **3** realizes seamless presentation of multiple scenes using only the decoder section.

In the example illustrated in Figure **3,** the read rate for the data storage medium **12** is fixed and therefore the rate at which the bit stream is input to the buffer **15** (i.e., the buffer input rate) is also constant all through the scenes. However, if the read rate for the data storage medium **12** is changeable up to its upper-limit, the rates at which bit streams representing respective scenes are input to the buffer **15** may be controlled to some extent following the method shown in Figures **1** and **2** while adopting the method shown in Figures **3** and **4.** In that case, the capacity increment γ of the buffer **15** can be reduced.

Also, by increasing the capacity of the buffer **15** in advance by the deficit required while taking the number of scenes to be joined and encoding bit rates and the number of frames of respective scenes into account, four or more scenes can be joined with each other seamlessly.

In the first and second video playback systems, the next scene to be joined with the current scene seamlessly is supposed to be known in advance. However, an unexpected scene join request may be received while a scene is being presented. The video playback system to be described below can cope with even a situation like this.

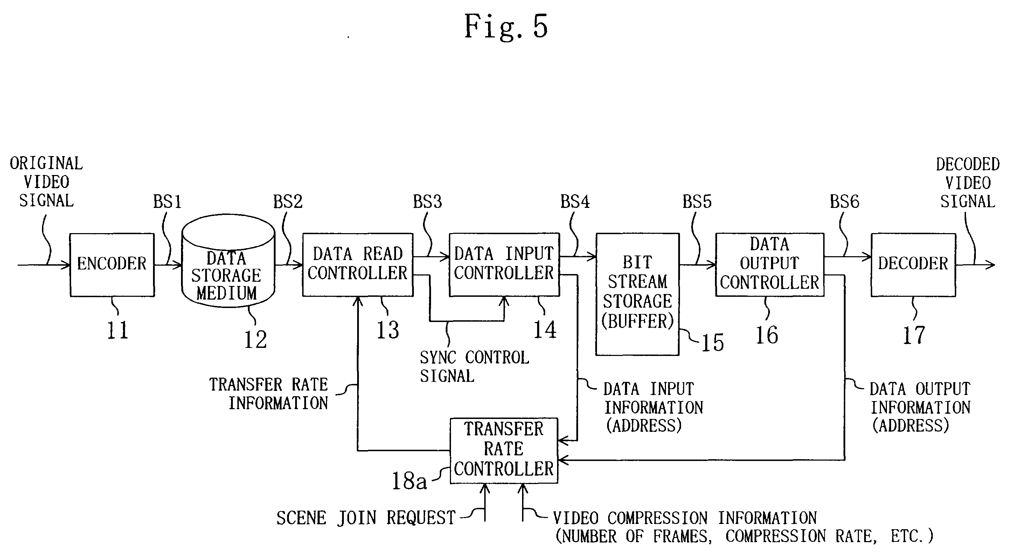

Figure **5** illustrates a third exemplary video playback system to which the inventive digital decoding method is also applicable. A transfer rate controller **18a** shown in Figure **5** is different from the transfer rate controller **18** shown in Figure **1** in that the former controller **18a** receives a scene join request. The other components shown in Figure **5** are the same as the counterparts shown in Figure **1.**

Responsive to a scene join request received while the current scene is being presented, the transfer rate controller **18a** shown in Figure **5** estimates an occupancy level of the buffer **15** when the first frame of the next scene to be joined starts being decoded. If the estimated occupancy level is less than the predetermined level **Sv** by a deficit γ, then the transfer rate controller **18a** controls the rate at which the remaining frames of the current scene will be read out from the data storage medium **12** to cover the data quantity deficit γ.

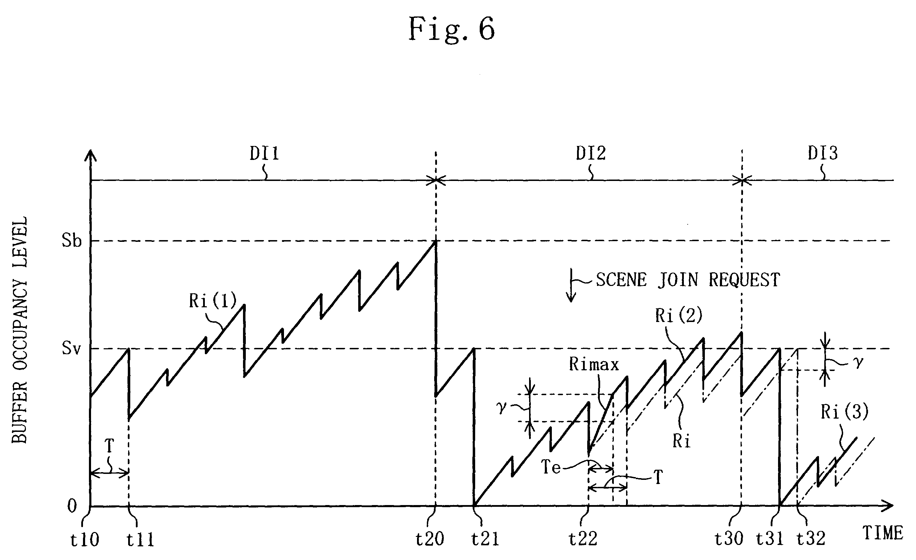

Figure **6** illustrates exemplary changing occupancy levels of the decoder buffer **15** shown in Figure **5.** In Figure **6**, **DI1, DI2** and **DI3** denote intervals during which respective bit streams representing first, second and third scenes are input to the buffer **15.** The second and third scene input intervals **DI2** and **DI3** start at times **t20** and **t30,** respectively. In this case, a request that the third scene be joined with the second scene is received while the second scene is being presented. The one-dot-chain line shown in Figure **6** represents that if the buffer input rates **Ri(1), Ri(2)** and **Ri(3)** for the respective scenes are kept constant at **Ri,** then the buffer **15** will underflow at a time **t31.** On the other hand, the solid line shown in Figure **6** represents that if the buffer input rate **Ri(2)** for the second scene is increased to a maximum read rate **Rimax** for the data storage medium **12** for just a short period of time **Te** in response to the scene join request, then the buffer **15** will not underflow.

According to the decoding process as plotted by the one-dot-chain line in Figure **6,** the occupancy level of the buffer **15** is lower than the predetermined level **Sv** by the deficit γ at a time **t31,** which is one frame period **T** later than the time **t30.** Thus, decoding of the first frame of the third scene cannot be started immediately but postponed until a time **t32,** when the data will be stored in the buffer **15** to the predetermined level **Sv.** That is to say, a startup delay is caused between the times **t31** and **t32,** and therefore the third scene cannot be joined with the second scene seamlessly. In this case, the data quantity deficit γ can be estimated by Equation (4).

In contrast, in the decoding process as represented by the solid line in Figure **6,** the buffer input rate **Ri(2)** for the second scene (i.e., the read rate for the data storage medium **12**) is increased to the maximum rate **Rimax** for just a short period **Te** of time needed for covering the data quantity deficit γ during the one frame period **T** starting at the time **t22** when the scene join request is received. That is to say, the buffer input rate **Ri(2)** is raised for the period **Te** meeting the following Equation (5):

$$\gamma = (Rimax - Ri) \times Te \qquad (5)$$

Then, once the data quantity deficit γ has been eliminated, the buffer input rate **Ri(2)** is restored to its original rate **Ri.** Accordingly, by performing a simple control like this responsive to a scene join request, the third scene can be joined with the second scene seamlessly without causing the buffer **15** to underflow.

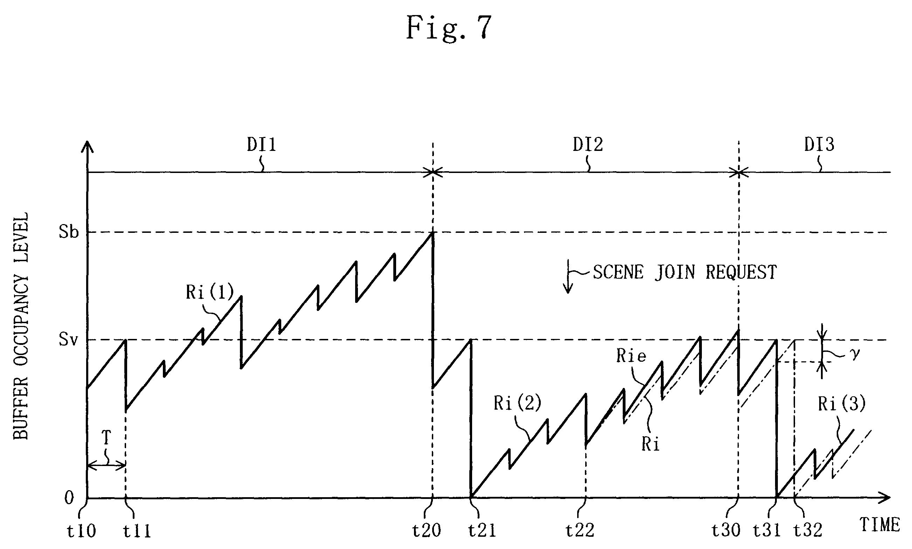

Figure **7** illustrates another exemplary changing occupancy levels of the buffer **15** shown in Figure **5.** Suppose a request that the third scene be joined with the second scene is received while the second scene is being presented as in the example shown in Figure **6.** The solid line shown in Figure **7** represents that if the buffer input rate **Ri(2)** (i.e., the read rate for the data storage medium **12**) for the remaining frames of the second scene is increased to a rate **Rie** on average in response to the scene join request, then the buffer **15** will not underflow.

According to the decoding process as represented by the solid line in Figure **7,** the buffer input rate **Ri(2)** for the second scene is increased to the rate **Rie** required for covering the data quantity deficit γ for a plurality of frame periods starting at the time **t22** when the scene join request is received. That is to say, if the number of remaining frames of the current scene (i.e., the second scene in this example) when the scene join request is received is denoted by **Nr(2),** then the remaining time available for reading the current scene from the data storage medium **12** is given by T × Nr(2). Thus, a rate **Rie** given by the following Equation (6):

$$Rie = Ri + \gamma / (T \times Nr(2)) \qquad (6)$$

is adopted as a rate for reading out the remaining frames. Accordingly, as in the example shown in Figure **6,** the third scene can also be joined with the second scene seamlessly without causing the buffer **15** to underflow.

In this manner, by controlling the rate for reading out the remaining frames of the current scene from the data storage medium **12** in accordance with the data quantity deficit $\gamma$ that is estimated when a scene join request is received, the system shown in Figure **5** realizes seamless presentation of multiple scenes using only the decoder section.

Since Te <T in the example shown in Figure **6,** the read rate is controlled for just one of the remaining frames of the second scene. However, if T < Te <2T, for example, the read rates of two frames should be controlled.

**Claims**

1. In a digital decoding apparatus in which encoded bit streams, representing multiple scenes of a moving picture, are read out from a data storage medium and then input to a decoder by way of a buffer, a method of digitally decoding the bit streams one after another to present the scenes seamlessly,

   the method comprising the steps of:
   controlling a rate at which a current scene is being read out from the data storage medium such that an occupancy level of the buffer will be a predetermined level or more when a first frame of a next scene starts being decoded; and
   decoding the encoded bit streams provided from the buffer.

2. The method of Claim 1, further comprising the step of controlling the rate at which the current scene is being read out from the data storage medium by reference to an occupancy level of the buffer at a point in time data of a first frame of the current scene was output from the buffer to the decoder.

3. The method of Claim 1, further comprising the step of controlling the rate at which the current scene is being read out from the data storage medium by reference to an occupancy level of the buffer at a point in time data of a last frame of a previous scene, preceding the current scene, was output from the buffer to the decoder.

4. The method of Claim 1, further comprising the steps of:

   in response to a scene join request received while the current scene is being presented, estimating how high an occupancy level of the buffer will be when a first frame of a next scene to be joined with the current scene starts being decoded; and
   if the estimated buffer occupancy level when the next scene starts being decoded is less than the predetermined level by a deficit,
   controlling a rate at which remaining frames of the current scene will be read out from the data storage medium so as to cover the deficit.

5. The method of Claim 4, further comprising the step of maximizing the rate at which the scenes are read out from the data storage medium until the deficit has been eliminated.

6. The method of Claim 4, further comprising the steps of:

   obtaining an increment, by which the read rate should be raised, by dividing the deficit by residual time available for reading out the current scene from the data storage medium; and
   raising the rate at which the remaining frames of the current scene will be read out from the data storage medium by the increment.

7. In a digital decoding apparatus in which encoded bit streams, representing multiple scenes of a moving picture, are input to a decoder by way of a buffer, a method of digitally decoding the bit streams one after another to present the scenes seamlessly,

   the method comprising the steps of:
   estimating how high an occupancy level of the buffer will be when a first frame of each said scene starts being decoded; and
   if the estimated buffer occupancy level when a scene starts being decoded is less than a predetermined level by a deficit,
   postponing start of decoding a first frame of a first scene until data of the first scene has been stored in the buffer to a level equal to a sum of the deficit and the predetermined level.

8. The method of Claim 7, further comprising the step of increasing a default capacity of the buffer by the deficit, the default capacity being defined on the supposition that the buffer occupancy level will not be less than the predetermined level.

9. The method of Claim 8, further comprising the step of determining, by reference to a difference in compression rate between two consecutive scenes and a ratio of the number of frames included in one of these two scenes to that of the other, how much the default capacity of the buffer should be increased.

10. In a digital decoding apparatus in which encoded bit streams, representing multiple scenes of a moving picture, are input to a decoder by way of a buffer, a method of digitally decoding the bit streams one after another to present the scenes seamlessly,

   the method comprising the steps of:
   controlling a rate at which each said bit stream, associated with one of the scenes, is input to the buffer to no greater than a certain limit, and then estimating how high an occupancy level of the buffer will be when a first frame of each said scene starts being decoded; and
   if the estimated buffer occupancy level when a scene starts being decoded is less than a predetermined level by a deficit,
   postponing start of decoding a first frame of a first scene until data of the first scene has been stored in the buffer to a level equal to a sum of the deficit and the predetermined level.

11. The method of Claim 10, further comprising the step of controlling the rate at which each said bit stream, associated with one of the scenes, is input to the buffer by reference to an estimated occupancy level of the buffer when data of a first frame of each said scene is output from the buffer to the decoder.

12. The method of Claim 10, further comprising the step of controlling the rate at which each said bit stream, associated with one of the scenes, is input to the buffer by reference to an estimated occupancy level of the buffer when data of a last frame of a previous scene, preceding a current scene, is output from the buffer to the decoder.

13. The method of Claim 10, further comprising the step of increasing a default capacity of the buffer by the deficit, the default capacity being defined on the supposition that the buffer occupancy level will not be less than the predetermined level.

14. The method of Claim 13, further comprising the step of determining, by reference to a difference in compression rate between two consecutive scenes and a ratio of the number of frames included in one of these two scenes to that of the other, how much the default capacity of the buffer should be increased.

# Fig. 1

ORIGINAL
VIDEO
SIGNAL

DECODED
VIDEO
SIGNAL

BS1    BS2    BS3    BS4    BS5    BS6

| ENCODER | DATA STORAGE MEDIUM | DATA READ CONTROLLER | DATA INPUT CONTROLLER | BIT STREAM STORAGE (BUFFER) | DATA OUTPUT CONTROLLER | DECODER |

11    12    13    14    15    16    17

SYNC CONTROL
SIGNAL

TRANSFER RATE
INFORMATION

DATA INPUT
INFORMATION
(ADDRESS)

DATA OUTPUT
INFORMATION
(ADDRESS)

TRANSFER
RATE
CONTROLLER

18

VIDEO COMPRESSION INFORMATION
(NUMBER OF FRAMES, COMPRESSION RATE, ETC.)

# Fig. 2

# Fig. 3

ORIGINAL
VIDEO
SIGNAL

DECODED
VIDEO
SIGNAL

BS1    BS2    BS3    BS4    BS5    BS6

| ENCODER | | DATA STORAGE MEDIUM | | DATA READ CONTROLLER | | DATA INPUT CONTROLLER | | BIT STREAM STORAGE (BUFFER) | | DATA OUTPUT CONTROLLER | | DECODER |

11    12    13    14    15    16    17

DATA INPUT
INFORMATION
(ADDRESS)

BUFFER SIZE INFORMATION

DECODE START INFORMATION

DATA OUTPUT
INFORMATION
(ADDRESS)

DECODING
CONTROLLER

19

PRESENTATION INFORMATION
(ORDER OF SCENES
PRESENTED, ETC.)

VIDEO COMPRESSION INFORMATION
(NUMBER OF FRAMES,
COMPRESSION RATE, ETC.)

EP 1 067 793 A2

# Fig. 4

Fig. 5

# Fig. 6

EP 1 067 793 A2

# Fig. 7

EP 1 067 793 A2